# EUROPEAN PATENT APPLICATION

(11) **EP 1 137 284 A2**
(43) Date of publication of application: **26.09.2001**
(21) Application number: 00128527.9
(22) Date of filing: 27.12.2000
(51) Int. Cl.: H04N 7/18

(54) **Image display system**

(30) Priority: 21.03.2000 IT BO200040
(71) Applicant: TEUCO GUZZINI S.p.A., 62010 Montelupone (IT)
(72) Inventor: Lenci, Fabio, 00144 Roma (IT)
(74) Representative: Eccetto, Mauro

(57) **Abstract**

An image display system (10) comprising a device (60) for processing of the images, and a display unit (50), on which these images are displayed; system (10) characterised
- in that the display unit (50) comprises a screen (51) and an element (52) which is superimposed fully on the screen (51),
- in that the device (60) comprises means (61, 66, 67), which, if they are activated by the operator, permit functioning of the display unit (50) as a screen (55), or, if they are deactivated by the operator, permit functioning of the display unit (50) as a mirror, and
- in that the device (60) comprises a telecamera (63), which is positioned such as to show the rear parts of the body of the user (U₁), the images picked up by the telecamera (63) being displayed by the screen (51).

## Description

The present invention relates to an image display system. In particular, the present system applies to displaying of images in a bathroom.

As is known, in bathrooms, at least one mirror is used, in which the user can be reflected, in order to be assisted in conventional operations of cleansing and/or applying make-up. Conventionally, this mirror is suspended on a wall of the room, at the sink, such as to facilitate such operations.

In addition, recently, use has become increasingly common in bathrooms, of a display unit which can have the most varied functions of information and/or entertainment. For example, recently, television screens have been distributed, which are compatible with the electrical safety standards required in an environment in which the humidity present and the jets of water of various origins can jeopardise the physical safety of the persons present. In addition, very recently, use has become increasingly common of display systems for games or for entertainment of the users of the bathroom.

However, the multiplicity of screens required in order to meet the desired performance levels makes it necessary to have available a considerable amount of free space on the walls of the bathroom in order to install these screens, which is not always possible, in particular in the case of bathrooms with reduced dimensions.

In addition, an increase in the number of display units present in the bathroom also increases accordingly the costs for assuring adequate electrical protection of the persons present.

According to the present invention the bathroom can be equipped with a fixed telecamera. The lens of the telecamera faces in the direction of the nape of the neck of the user. This means that, by activating the system object of the present invention the user himself/herself can see the rear parts of his/her body on a screen. By this means it is possible to obtain a full visual check of ones own hairstyle, clothing, etc, even from an unusual angle, which, for example, would require use of a second mirror. Furthermore, advantageously the user can move the telecamera by means of devices commonly used in order to pick up different parts of his/her own body.

The object of the present invention is, thus, to provide a simple and efficient solution to such problems, by producing an image display system which comprises a device for processing of the images, and a display unit on which these images are displayed; system characterised in that the display unit comprises a screen and an element which is superimposed fully on the screen, in that the device comprises means, which, if they are activated by the operator, permit functioning of the display unit as a screen, or, if they are deactivated by the operator, permit functioning of the display unit as a mirror, and in that the device comprises a telecamera, which is positioned such as to show the rear parts of the body of the user, the images picked up by the telecamera being displayed by the screen.

By this means, the space on the wall which acts as a background for the sink, which conventionally is reserved for accommodation of a mirror, can also be used simultaneously to receive a screen, and in particular an ultra-flat screen, which can display images of an information and/or entertainment type.

Inter alia, the solution adopted provides an efficient response also to the problem of safety in the bathroom.

A further advantage of the present invention consists in the fact that, if a telecamera is placed behind the user, the user can check personally the rear portions of his/her body, in order to verify his/her hairstyle, clothing, etc.

The present innovation will now be described with reference to the attached drawings, which illustrate a non-limiting embodiment of it, in which:
- Figure 1 is an overall view of a bathroom equipped with the system which is the subject of the present invention; and
- Figure 2 represents schematically the system which is the subject of the present invention.

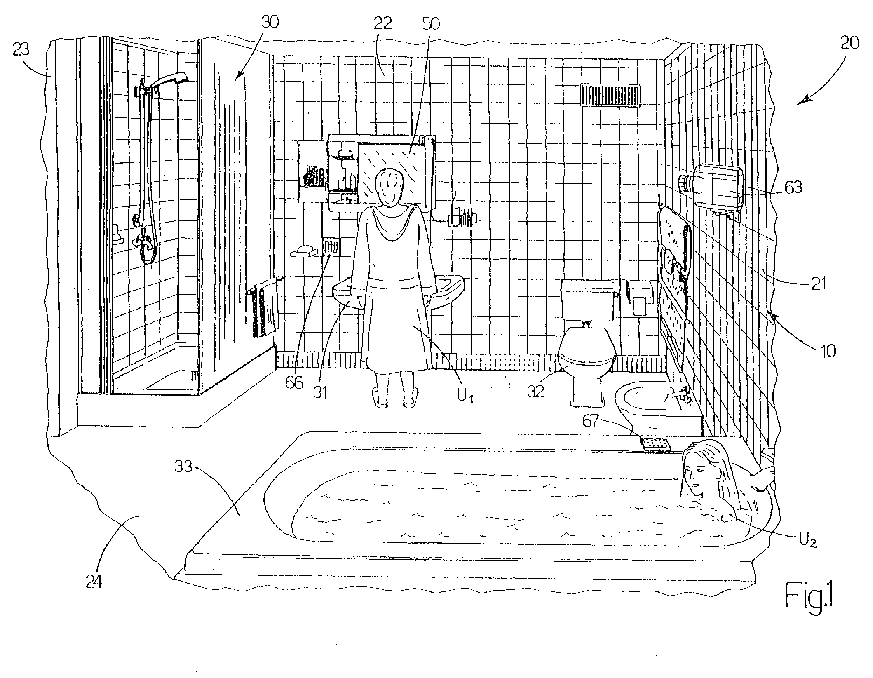

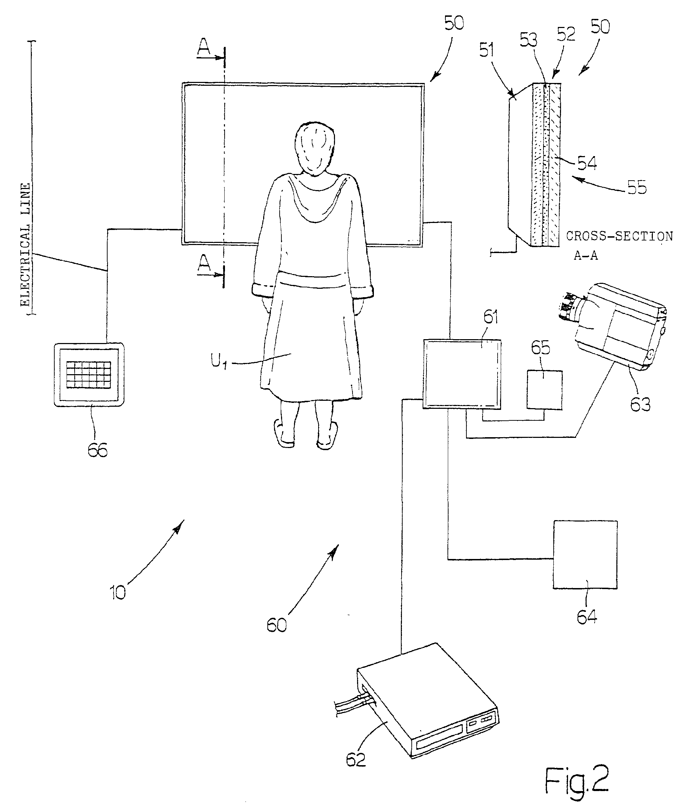

With reference to Figures 1 and 2, the number 10 indicates as a whole a system which is the subject of the present innovation.

The system 10 can be applied, for example, in a bathroom 20, but it can also be applied validly in any other environment.

As shown in Figure 1, the bathroom 20 has at least four walls, of which only three 21, 22, 24 can be seen in the Figure, a floor 24 and a ceiling (not shown). The walls 21, 22, 23, the floor 24 and the ceiling (not shown) can support a plurality of devices, such as, for example, a shower cabin 30, a sink 31, a toilet pan 32 and a bathtub 33, which in particular can be a hydromassage tub. In addition, in the bathroom 20, there is present at least one display unit 50, which, in the embodiment shown in Figure 1, is suspended on the wall 22, in a position which is raised relative to the sink 31.

By means which will be described in greater detail hereinafter, the display unit 50 can allow a user U1 to be reflected, in order to carry out the conventional operations of cleansing and/or applying make-up.

In fact, as can be seen in Figure 2, in addition to the aforementioned display unit 50, the system 10 which is the subject of the present invention comprises a device 60 for processing of images, which in turn comprises an electronic system 61, which is connected to a video recorder 62, a telecamera 63, and a further source 64 of visual and/or sound information, such as satellite TV, cable TV, or an internet connection etc. In addition, the system 61 can access or load electronic information from a data bank 65, or supply information to the data bank. This information can, for example, consist of video games to be displayed on the unit 50.

The system 10 can be controlled either by means of a keypad 66, which for example is suspended on the wall 22, or by a remote control 67 (Figure 1) which can be actuated by a second user U₂ who is lying in the tub 33.

As shown for example in Figure 2, the display unit 50 comprises a screen 51, for example of the ultra-flat type, and an element 52 superimposed on the latter.

According to a first embodiment, this element 52 consists of a semi-opaque or so-called semi-transparent layer 53, which is at least partially reflective, and is covered by a sheet of glass 54. The semi-opaque layer 53 can consist of a substance based on silver. In addition, the element 52 makes it possible to see images displayed on the screen 51, and at least one of the users U1, U2, when the screen 51 has been activated by means of the keypad 66 or the remote control 67. It can be stated that, in a certain manner, switching on the screen 51 makes the display unit 50 function as a new screen 55, which has optical characteristics slightly different from those of the original screen 51. In particular, the presence of the layer 53 on the screen 51 detracts slightly from the quality of the images which appear on the screen 51 itself, without however detracting significantly from the possibility of the user U₁, U₂ using it.

However, if the screen 51 is switched off, the element 52 functions as a true mirror, owing to the obscured surface of the screen 51, and the presence of the at least partially reflective layer 53.

It will be appreciated that the selection of the material for forming the layer 53 is based on a compromise, since it must be assured that if the screen 51 is not functioning, there is good functioning of the element 52 as a mirror, combined with good visibility of the images which appear on the screen 55, if, on the other hand, the screen 51 is functioning.

According to another embodiment of the present invention, the element 52 can consist of a crystal which can be polarised electrically, such that, at the choice of the user U₁, U₂, it can function either as a reflective mirror, or as transparent glass, thus allowing the images displayed on the screen 51 to filter through. In particular, activation of the element 52 as transparent glass can be carried out simultaneously with switching on of the screen 51.

As previously stated, the bathroom 20 can be equipped with a fixed telecamera 63, for example on the wall 21. The lens of the telecamera 63 faces in the direction of the nape of the neck of the user U₁. This means that, by activating the system 10 by means of the keypad 66, the user U₁, himself/herself, can see the rear parts of his/her body on the screen 55 of the device 50. By this means it is possible to obtain a full visual check of ones own hairstyle, clothing, etc, even from an unusual angle, which, for example, would require use of a second mirror.

## Claims

1. Image display system (10), comprising a device (60) for processing of the images, and a display unit (50), on which these images are displayed; system (10) characterised
- in that the said display unit (50) comprises a screen (51) and an element (52) which is superimposed fully on the said screen (51),
- in that the said device (60) comprises means (61, 66, 67), which, if they are activated by the operator, permit functioning of the said display unit (50) as a screen (55), or, if they are deactivated by the operator, permit functioning of the said display unit (50) as a mirror, and
- in that the said device (60) comprises a telecamera (63), which is positioned such as to show the rear parts of the body of the user (U₁), the images picked up by the said telecamera (63) being displayed by the said screen (51).

2. System (10) as claimed in Claim 1, wherein the said telecamera (63) can be moved by the user (U₁) by means of devices in order to pick up different parts of his/her own body.

3. System (10) as claimed in at least one of the preceding claims, wherein the said element (51) comprises a layer (52) of semi-opaque material, which is at least partially reflective.

4. System (10) as claimed in Claim 3, wherein the said material from which the said layer (52) is formed, is a material based on silver.

5. System (10) as claimed in Claim 3 or Claim 4, wherein the said layer (52) is covered by a sheet of transparent glass (54).

6. System as claimed in Claim 1, wherein the said element (52) is a crystal which can be polarised electrically, such as to assume selectively the function of transparent glass, thus allowing images which appear on the said screen (51) to be seen, and therefore constituting a new screen (55), or the function of a mirror, thus preventing any images which are present on the said screen (51) from being seen.

7. System (10) as claimed in Claim 6, wherein the said means (61, 66, 67) activate or deactivate simultaneously the said screen (51) and the said element (52).

8. System (10) as claimed in at least one of the preceding claims, wherein the said device (10) comprises at least one video recorder (62), at least one electronic data bank (65) containing at least one video game, and at least one connection (64) to a satellite TV, a cable TV, or to the internet.
